# EUROPEAN PATENT SPECIFICATION

(11) **EP 1 812 352 B1**
(45) Date of publication and mention of the grant of the patent: **18.01.2012**
(21) Application number: 05800932.5
(22) Date of filing: 11.11.2005
(51) Int. Cl.: C02F 11/08, B01J 3/00

(54) **METHOD FOR SUPERCRITICAL WATER OXIDATION OF A STREAM CONTAINING OXIDIZABLE MATERIAL**
VERFAHREN ZUR OXIDATION EINES OXIDIERBARES MATERIAL ENTHALTENDEN STROMS IN ÜBERKRITISCHEM WASSER
PROCEDE D'OXYDATION DE FLUIDE SUPERCRITIQUE D'UN FLUX CONTENANT UNE MATIERE OXYDABLE

(30) Priority: 15.11.2004 SE 0402784
(43) Date of publication of application: 01.08.2007
(73) Proprietor: Hollingford Limited, Cork (IE)
(72) Inventor: GIDNER, Anders, DE-50935 KÖLN (DE)
(74) Representative: Weldon, Michael James
(86) International application number: PCT/SE2005/001705
(87) International publication number: WO 2006/052207

(56) References cited:
- GB-A- 1 593 661
- US-A- 3 812 090
- US-A- 5 720 889
- US-A- 5 770 174
- US-A- 6 017 460
- DATABASE WPI Week 200282, Derwent Publications Ltd., London, GB; AN 1998-355763, XP008113457 & JP 3 347 610 B2 (ORGANO CORP) 20 November 2002

## Description

### FIELD OF INVENTION

This invention relates to a method for supercritical water oxidation.

### DESCRIPTION OF RELATED ART AND BACKGROUND OF THE INVENTION

Control of reaction temperature is essential to maintaining control of many reaction processes and, therefore, the end results produced by such processes. In some instances, exothermic reactions proceed so rapidly that, unless controlled, they generate temperatures which endanger the integrity of the reaction vessel itself. Many reactions produce reaction by-products which, if the temperature is not properly controlled, may proceed to further undesired secondary reactions.

US 5,770,174 issued to Eller et al. discloses an invention wherein oxidation reactions in a reactor operating at or near supercritical water conditions are controlled by simultaneous and/or sequential injection of water and one of the reactants (at timed and/or spaced intervals) into a flowing process stream comprised of water at supercritical or near supercritical conditions and the other reactant. The reactant injected may be either oxidant or material to be oxidized, depending on the stoichiometric imbalance of the process stream. By injecting water, the reaction temperature is rapidly reduced. However, simultaneous injection of reactant re-starts the reaction so that temperature again increases and the reaction process becomes a series of reaction stages which are controlled to prevent the reaction temperature from exceeding a pre-determined maximum temperature which, for instance, may be dictated by material of construction limitations.

### SUMMARY OF THE INVENTION

The inventor of the present invention has, however, noted that the invention disclosed by Eller et al. may be improved to obtain a supercritical water oxidation process with higher capacity in case the organic content of the process stream is too high to be handled by a single reaction stage.

Further, the present invention aims at improving the capacity when handling process streams which are highly viscous and may clog up heat exchangers of the reaction system, such as e.g. sewage sludge streams, wastepaper sludge streams, and sludge streams from the manufacturing of drinking-water, as well as process streams which are difficult to concentrate with regard to its organic content, such as streams containing both large and small organic compounds, particularly large non-volatile and small volatile organic compounds.

A method for supercritical water oxidation in accordance with the present invention comprises the steps of causing a first process stream containing water and organic material to flow in a reaction chamber; adding a first flow of oxidant to the first process stream in stoichiometric shortage; reacting organic material in the first process stream with the oxidant in a first reaction stage; adding a second process stream containing water and organic material to the reacted first process stream, the second process stream having a temperature which is lower than a temperature of the first process stream to thereby reduce the temperature in the reaction chamber; adding a second flow of oxidant to the process streams; and reacting organic material in the first and second process streams with the second flow of oxidant in a second reaction stage.

The first flow of oxidant is added to the first process stream to control the reaction of the first process stream so that the highest temperature in the reaction chamber will not exceed a maximum allowed temperature. Preferably, the temperature is sensed in the reaction chamber, and the adding of the first flow of oxidant is controlled in response to the sensed temperature.

The second process stream containing water and organic material is added to the reacted first process stream to quench the first process stream. Simultaneously, the second process stream contains additional organic content to be oxidized in the second reaction stage together with the organic content of the first process stream that was not oxidized in the first reaction stage. Therefore the second process stream may be referred to as a *feed*/*quench* stream.

Provided that the capacity of the two reaction stages can handle more than a single process stream with regard to its COD (chemical oxygen demand), organic content in the second process stream can be oxidized together with the second stage oxidation of the first process stream. If the COD content of the second stream is too high so that the cooling effect of the second process stream is not high enough, additional quenching water may be added to the process to reduce the overall COD concentration.

The second flow of oxidant, which preferably is added to the process streams downstream of the intake of the second process stream, is added in stoichiometric surplus if the second reaction stage is the last reaction stage of the reaction chamber to assure complete oxidation of the first and second process streams; otherwise the second flow of oxidant is preferably added in stoichiometric shortage to control the reaction rate in the second reaction stage.

The invention is perfectly suitable to handle process streams which are highly viscous and may clog up a heat exchanger of the reaction system, since the second process stream can be injected into the reaction process directly without being heated by e.g. a heat exchanger.

The invention is also suitable to handle process streams which are difficult to concentrate with regard to its organic content and which therefore may have "room" for more organic material in the second reaction stage. The second process stream is injected to quench the first reaction stage and to further feed the second reaction stage.

The first process stream is thus preferably moderately-to-low viscous wastewater or sludge having an organic content sufficient to maintain a self-sustaining reaction, whereas the second process stream may be a viscous process stream or a process stream which does not produce sufficient energy to maintain a self-sustaining reaction. The first process stream and feed/quench stream may also have the same composition in which case the described procedure results in an increased capacity compared to normal water quench as practiced in US 5,770,174.

Other features and advantages of the invention will become more readily understood from the following detailed description taken in connection with the appended claims and attached drawing.

### DETAILED DESCRIPTION OF EMBODIMENTS

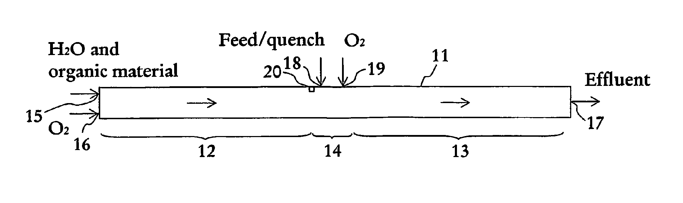

A typical reactor adapted to utilize the principles of the invention is schematically illustrated in the drawing.

The reactor comprises an elongated reaction chamber or tube 11. The reaction chamber 11 has three different sections: a first reaction stage or section 12, a second reaction stage or section 13, and a quenching stage or section 14 located between the reaction sections 12, 13.

The reaction chamber 11 comprises two inlets 15, 16 and an outlet 17 which, of course, are interconnected with appropriate inlet and outlet apparatuses and control devices for controlling the flow rates of the various streams and flows into the reaction chamber 11. The configuration, etc., of the inlet and outlet apparatuses and control devices will be determined by the reaction process and therefore form no part of this invention. A plurality of injection ports 18, 19 are provided in the quenching section 14 of the reaction chamber 11.

A first process stream containing water and organic material is fed into inlet 15 and is caused to flow in the reaction chamber 11 as illustrated by the arrows in the drawing. A first flow of a selected oxidant is injected, via inlet 16 of the reaction chamber, to the first process stream, and organic material in the first process stream is reacted with the first flow of oxidant generally through supercritical water oxidation in the first reaction section 12. The oxidant may be air, oxygen, peroxide or any other desired oxidizing material.

To obtain suitable reaction conditions, the pressure in the reactor tube should be greater than about 221 bar (218 atm), and the first process stream should be heated to an elevated temperature even though it does not need to be a temperature needed to obtain conditions supercritical to water. As the first process stream moves from the inlet 15 through the first reaction section 12, oxidation of the oxidizable organic material releases energy in the form of heat which causes the temperature of the first process stream to rise. As the temperature rises, the rate of reaction increases and further raises the temperature. As a result a supercritical condition to water is rapidly reached.

However, the organic content of the first process stream in the illustrated embodiment is in many cases too high to be oxidized in a single reaction stage; the temperature would be too high for the material of construction used for the reaction chamber. Typically, Alloy 625 may be used as material of construction, and the maximum permitted temperature for long duration use for this material is about 600 °C.

In such a case, the first flow of oxidant is added in stoichiometric shortage with respect to the organic content of the first process stream so that the oxidizable organic material in the first process stream will not be fully oxidized. The injection is performed to control the reaction of the first process stream so that the highest temperature in the first reaction section 11 will not exceed a predetermined maximum permitted temperature. Preferably, the temperature is sensed by a sensor 20 in the reaction chamber 11, and the addition of the first flow of oxidant is controlled in response to the sensed temperature.

At the intersection between the first reaction section 12 and the quenching section 14, the inlet port 18 is positioned and adapted to inject a second process stream containing water and organic material into the reaction chamber 11. The second process stream has a temperature which is lower than a temperature of the first process stream at the intersection between the first reaction section 12 and the quenching section 14. Preferably, the second process stream has a temperature below about 50 °C, and more preferably a temperature essentially similar to the temperature of the surrounding environment, in which the method is carried out, e.g. the temperature of ambient air in the building wherein the reactor is located. The second process stream is preferably injected into the reaction chamber 11 directly without having to be heated.

Alternatively, the second process stream has a temperature of about 70-90 °C. This may be particularly advantageous if the first and second process streams are comprised of a sludge, which is pumped from a common tank. The higher temperature reduces the viscosity of the sludge.

The second process stream injected at port 18 absorbs some of the heat energy and causes the temperature of the stream to drop dramatically. The temperature may be reduced below 374 °C. The second process stream has thus a quenching effect.

Simultaneously, the second process stream contains additional organic material to be oxidized. The organic content of the second process stream may be as much as the difference of the maximum allowable organic content oxidizable in the second reaction section and the organic content left in the first process stream after having reached the quenching section 14. Thus, the second process stream also has a feeding effect, and it may therefore be referred to as a feed/quench stream.

The first and second process streams may have similar contents, and they may be formed from a single source of water and organic material. The process streams may for instance be highly viscous, such as e.g. a stream comprised of sewage sludge, wastepaper sludge, or sludge from the manufacturing of drinking-water.

Alternatively, the process streams may be streams that are difficult to concentrate with regard to its organic content, e.g. due to the fact that they contains both large and small organic compounds, particularly large non-volatile and small volatile organic compounds. If such streams are evaporated organic material will be found in both the condensate and in the concentrate, or if such streams are filtered through a membrane filter, the small organic compounds may follow the water phase through the membrane.

In yet an alternative version, the first and second process streams may be of quite different nature. The second process stream may contain thicker sludge since it can be injected into the reaction process directly without being pre-heated by e.g. a heat exchanger.

In the illustrated embodiment, a second flow of the selected oxidant is injected into the reaction chamber 11 in a downstream end of the quenching section 14. As a result, the oxidation (reaction) is re-started. The temperature of the first and second process streams increase as the streams move into the second reaction section 13. Organic material in the first and second process streams reacts with the second flow of oxidant generally through supercritical water oxidation in the second reaction section 13, and the effluent is output at the outlet 17.

In an alternative embodiment the second flow of oxidant and the second process stream are added to the first process stream through a common inlet (not illustrated).

Preferably, the second flow of oxidant is added in stoichiometric surplus, e.g. 5-20 % surplus, with respect to the organic content of the first and second process flows in the quenching section 14 to assure that all organic material in the first and second process streams is oxidized in the reaction chamber 11. Thus, the flow of the second oxidant cannot typically be controlled so that the temperature of the first and second process streams will not exceed a predetermined maximum permitted temperature in a downstream end of the second reaction section 13. Instead, the second process stream has to be controlled so that the temperature does not increase beyond the predetermined maximum permitted temperature in the second reaction section 13.

The idea of the present invention resides in that for each given waste, there is an upper limit for the amount of oxygen that can be added to each kilogram waste, called a maximum COD (chemical oxygen demand). This maximum COD is determined by the easiness, with which the oxidation reaction starts, i.e. the lowest possible start temperature; and by the maximum temperature, for which the material of construction in the reactor is approved.

Assuming that the maximum COD per oxygen feed is 120 g/l and that the first feed (i.e. the first process stream) contains 170 g/l, it is possible to add more feed together with the quench stream (i.e. the second process stream) since there is only left 50 g/l COD after the first reaction stage. However, the quenching effect has to be achieved simultaneously. That is, if the feed/quench stream does not contain sufficient cold water to lower the temperature to the lowest possible start temperature, the maximum COD for the second reaction stage will be reduced.

If the content of the organic material in the second process flow is too high so that the quenching effect of the second process flow will not be sufficient, i.e. the energy needed to increase the temperature of the first and second process streams in the quenching section 14 is lower than the energy released while oxidizing all organic content in the first and second process streams in the second reaction section 13, additional quenching water (free from oxidizable material) is advantageously injected to the reaction chamber, either through any of the inlets 18, 19, or through a separate non-illustrated inlet in the quenching section 14.

Alternatively, different streams having different COD contents (e.g. a stream having low COD content and a stream having higher COD content) may be mixed to obtain a quench/feed stream that has optimum properties with regard both to the quenching effect and the organic content, so that an optimum capacity of the reactor can be obtained.

It shall be appreciated that the present invention may be performed in a multi-stage reactor, similar to the one disclosed in the above identified US 5,770,174 .

Thus, each of the reaction stages but the last one is controlled similar to the first reaction stage disclosed above, i.e. a flow of oxidant in stoichiometric shortage is injected at an upstream end of the reaction stage to control the reaction chamber temperature to be kept within the permitted range. Further, a feed/quench or quench only stream is injected upstream of each of the reaction stages but the first. These streams are preferably added to obtain an appropriate quenching between each of the reaction stages. A heated feed only stream is as above fed through the inlet of the reaction chamber to the first reaction stage.

Nevertheless, appropriate control of the organic content in the reaction chamber has to be performed to avoid higher amounts of organic material in the last reaction stage than can be oxidized in that reaction stage. This is achieved by controlling the last feed/quench stream.

Finally, a stream of feed/quench with an organic content depending on the organic content in the process stream at the upstream end of the last reaction stage, as well as a flow of oxidant in stoichiometric surplus are injected at the upstream end of the last reaction stage to completely oxidize the organic material in the reaction chamber.

Tests have been conducted to verify the result of the present invention. They were performed with two separated oxygen feeds, where quenching water was added before the last oxygen feed to obtain a prior art process. Subsequently, the quenching water was exchanged for a feed/quench to obtain a process of the present invention. An overall oxygen surplus of about 10% was used.

### Example 1

Feed and feed/quench: synthetic waste containing diesel oil COD -145 g/l. The results are shown in Table 1.

**Table 1**

| | Feed (kg/h) | Quench (kg/h) | Feed/quench (kg/h) | Oxygen (kg/h) |
|---|---|---|---|---|
| Prior art process | 250 | 37 | - | 40.5 |
| Inventive process | 250 | - | 68 | 50.5 |

### Example 2

Feed: wastepaper sludge COD -125 g/l and feed/quench: diesel oil and isopropanol COD ~200g/l (the feed/quench will in this test simulate a sludge having higher dry matter content, and thus higher COD, than the main feed). The results are shown in Table 2.

**Table 2**

| | Feed (kg/h) | Quench (kg/h) | Feed/quench (kg/h) | Oxygen (kg/h) |
|---|---|---|---|---|
| Prior art process | 250 | 27 | - | 35.5 |
| Inventive process | 250 | - | 75 | 60 |

### Example 3

Feed and feed/quench: wastepaper sludge COD -170 g/l. The results are shown in Table 3.

**Table 3**

| | Feed (kg/h) | Quench (kg/h) | Feed/quench (kg/h) | Oxygen (kg/h) |
|---|---|---|---|---|
| Prior art process | 215 | 37 | - | 40 |
| Inventive process | 215 | - | 103 | 60 |

The tests clearly show that the present invention provides for a capacity increase of between about 27 and 48%.

Although the invention has been described with particular reference to specific embodiments thereof, the forms of the invention shown and described in detail are to be taken as preferred embodiments of same. For instance, while the reactor has been described as a tubular reactor in the illustrated embodiment, the present invention is applicable to any kind of reactor design.

## Claims

1. A method for supercritical water oxidation **characterized by** the steps of:
- causing a first process stream containing water and organic material to flow in a reaction chamber (11);
- adding a first flow of oxidant to said first process stream in stoichiometric shortage;
- reacting organic material in said first process stream with said first flow of oxidant generally through supercritical water oxidation in a first reaction section (12);
- adding a second process stream containing water and organic material to said first process stream downstream of said first reaction section (12), said second process stream having a temperature which is lower than a temperature of said first process stream downstream of said first reaction section (12) to thereby reduce a temperature in a quenching section (14) of said reaction chamber located downstream of said first reaction section;
- adding a second flow of oxidant to said first process stream downstream of said first reaction section (12); and
- reacting organic material in said first and second process streams with said second flow of oxidant generally through supercritical water oxidation in a second reaction section (13) of said reaction chamber located downstream of said quenching section.

2. The method of claim 1 wherein said first flow of oxidant is added to control the supercritical water oxidation in said first reaction section so that a maximum temperature in said first reaction section will not exceed a maximum allowed temperature.

3. The method of claim 2 comprising the steps of sensing a temperature in said reaction chamber at a downstream end of said first reaction section; and controlling the adding of said first flow of oxidant in response to said sensed temperature.

4. The method of any of claims 1-3 wherein said method is controlled to obtain a temperature of said first process stream that is above a temperature needed to obtain conditions supercritical to water at a downstream end of said first reaction section.

5. The method of any of claims 1-4 wherein said second process stream has a temperature considerably below the supercritical temperature of water, and preferably essentially similar to a temperature of a surrounding environment, in which said method is carried out.

6. The method of any of claims 1-5 wherein said second process stream is added to said first process stream directly without having to be heated.

7. The method of any of claims 1-6 wherein said first and second process streams have similar contents.

8. The method of any of claims 1-7 wherein said first and second process streams are formed from a single source of water and organic material.

9. The method of any of claims 1-8 wherein said second process stream is highly viscous.

10. The method of any of claims 1-9 wherein said second process stream is comprised of sewage sludge, wastepaper sludge, or sludge from the manufacturing of drinking-water.

11. The method of any of claims 1-8 wherein said first process stream is difficult to concentrate with regard to its organic content.

12. The method of any of claims 1-8 wherein said first process stream contains both large and small organic compounds, particularly large non-volatile and small volatile organic compounds.

13. The method of any of claims 1-12 wherein said second process stream is added to said first process stream through a first inlet (18); and said second flow of oxidant is added to said first process stream through a second inlet (19), said second inlet being located downstream of said first inlet.

14. The method of any of claims 1-12 wherein said second flow of oxidant and said second process stream are added to said first process stream through a common inlet.

15. The method of any of claims 1-14 wherein said second flow of oxidant is added in stoichiometric surplus at the most downstream reaction section of said reaction chamber.

## Patentansprüche

1. Verfahren für die überkritische Wasseroxidation, **gekennzeichnet durch** folgende Schritte:
- Bewirken, dass ein erster Prozessstrom, der Wasser und organisches Material enthält, in eine Reaktionskammer (11) strömt;
- Hinzufügen eines ersten Stroms von Oxidationsmittel in stöchiometrischem Mangel zu dem genannten ersten Prozessstrom;
- Reagieren von organischem Material in dem genannten ersten Prozessstrom mit dem genannten ersten Strom von Oxidationsmittel allgemein **durch** überkritische Wasseroxidation in einem ersten Reaktionsabschnitt (12);
- Hinzufügen eines zweiten Prozessstroms, der Wasser und organisches Material enthält, zu dem genannten ersten Prozessstrom stromabwärts von dem genannten ersten Reaktionsabschnitt (12), wobei der genannte zweite Prozessstrom eine Temperatur aufweist, die niedriger ist als eine Temperatur des genannten ersten Prozessstroms stromabwärts von dem genannten ersten Reaktionsabsehnitt (12), um dadurch eine Temperatur in einem stromabwärts von dem genannten ersten Reaktionsabschnitt liegenden Abkühlabschnitt (14) der genannten Reaktionskammer zu senken;
- Hinzufügen eines zweiten Stroms von Oxidationsmittel zu dem genannten ersten Prozessstrom stromabwärts von dem genannten ersten Reaktionsabschnitt (12); und
- Reagieren von organischem Material in dem genannten ersten und dem genannten zweiten Prozessstrom mit dem genannten zweiten Strom von Oxidationsmittel allgemein **durch** überkritische Wasseroxidation in einem stromabwärts von dem genannten Abkühlabschnitt liegenden zweiten Reaktionsabschnitt (13) der genannten Reaktionskammer,

2. Verfahren nach Anspruch 1, wobei der genannte erste Strom von Oxidationsmittel hinzugefügt wird, um die überkritische Wasseroxidation in dem genannten ersten Reaktionsabschnitt zu Steuern, so dass eine Höchsttemperatur in dem genannten ersten Reaktionsabschnitt eine zulässige Höchsttemperatur nicht überschreitet.

3. Verfahren nach Anspruch 2, umfassend die Schritte des Abfühlens einer Temperatur in der genannten Reaktionskammer an einem stromabwärtigen Ende des genannten ersten Reaktionsabschnitts; und Steuern des Hinzufügens des genannten ersten Stroms von Oxidationsmittel als Reaktion auf die genannte abgefühlte Temperatur.

4. Verfahren nach einem der Ansprüche 1-3, wobei das genannte Verfahren dazu gesteuert wird, eine Temperatur des genannten ersten Prozessstroms zu erhalten, die über eine Temperatur liegt, die zum Erhalten von für Wasser überkritischen Bedingungen an einem stromabwärtigen Ende des genannten ersten Reaktionsabschnitts benötigt wird.

5. Verfahren nach einem der Ansprüche I-4, wobei der genannte zweite Prozessstrom eine Temperatur aufweist, die deutlich unter der überkritischen Temperatur von Wasser liegt, und vorzugsweise im Wesentlichen einer Temperatur einer umgebenden Umgebung ähnlich ist, in der das genannte Verfahren ausgeführt wird.

6. Verfahren nach einem der Ansprüche 1-5, wobei der genannte zweite Prozessstrom direkt zu dem genannten ersten Prozessstrom hinzugefügt wird, ohne erwärmt werden zu müssen.

7. Verfahren nach einem der Ansprüche 1-6, wobei der genannte erste und der genannte zweite Prozessstrom einen ähnlichen Inhalt aufweisen,

8. Verfahren nach einem der Ansprüche 1-7, wobei der genannte erste und der genannte zweite Prozessstrom aus einer einzigen Quelle von Wasser und organischem Material gebildet werden.

9. Verfahren nach einem der Ansprüche 1-8, wobei der genannte zweite Prozessstrom hoch viskos ist.

10. Verfahren nach einem der Ansprüche 1-9, wobei der genannte zweite Prozessstrom aus Abwasserschlamm, Altpapierschlamm oder Schlamm von der Herstellung von Trinkwasser besteht.

11. Verfahren nach einem der Ansprüche 1-8, wobei sich der genannte erste Prozessstrom in Bezug auf seinen organischen Inhalt schwer konzentrieren lässt.

12. Verfahren nach einem der Ansprüche 1-8, wobei der genannte erste Prozessstrom sowohl große als auch kleine organische Verbindungen enthält, insbesondere große nicht flüchtige und kleine flüchtige organische Verbindungen.

13. Verfahren nach einem der Ansprüche 1-12, wobei der genannte zweite Prozessstrom durch einen ersten Einlass (18) zu dem genannten ersten Prozessstrom hinzugefügt wird; und wobei der genannte zweite Strom von Oxidationsmittel durch einen zweiten Einlass (19) zu dem genannten ersten Prozessstrom hinzugefügt wird, wobei der genannte zweite Einlass stromabwärts von dem genannten ersten Einlass liegt.

14. Verfahren nach einem der Ansprüche 1-12, wobei der genannte zweite Strom von Oxidationsmittel und der genannte zweite Prozessstrom durch einen gemeinsamen Einlass zu dem genannten ersten Prozessstrom hinzugefügt werden.

15. Verfahren nach einem der Ansprüche 1-14, wobei der genannte zweite Strom von Oxidationsmittel in stöchiometrischem Überschuss an dem stromabwärtigsten Reaktionsabschnitt der Reaktionskammer hinzugefügt wird.

## Revendications

1. Procédé d'oxydation à l'eau supercritique **caractérisé par** les étapes consistant à :
- faire en sorte qu'un premier courant de processus contenant de l'eau et une substance organique s'écoule dans une chambre de réaction (11) ;
- ajouter un premier flux d'oxydant audit premier courant de processus en insuffisance stoechiométrique ;
- faire réagir la substance organique dans ledit premier courant de processus avec ledit premier flux d'oxydant généralement par oxydation à l'eau supercritique dans une première section de réaction (12) ;
- ajouter un second courant de processus contenant de l'eau et une substance organique audit premier courant de processus en aval de ladite première section de réaction (12), ledit second courant de processus ayant une température qui est inférieure à une température dudit premier courant de processus en aval de ladite première section de réaction (12) pour ainsi réduire une température dans une section de désactivation (14) de ladite chambre de réaction située en aval de ladite première section de réaction ;
- ajouter un second flux d'oxydant audit premier courant de processus en aval de ladite première section de réaction (12) ; et
- faire réagir la substance organique dans lesdits premier et second courants de processus avec ledit second flux d'oxydant généralement par oxydation à l'eau supercritique dans une seconde section de réaction (13) de ladite chambre de réaction située en aval de ladite section de désactivation.

2. Procédé selon la revendication 1, dans lequel ledit premier flux d'oxydant est ajouté pour réguler l'oxydation à l'eau supercritique dans ladite première section de réaction de telle sorte qu'une température maximum dans ladite première section de réaction ne dépasse pas une température autorisée maximum.

3. Procédé selon la revendication 2, comprenant les étapes consistant à détecter une température dans ladite chambre de réaction à une extrémité aval de ladite première section de réaction ; et à réguler l'ajout dudit premier flux d'oxydant en réponse à ladite température détectée.

4. Procédé selon l'une quelconque des revendications 1 à 3, ledit procédé étant régulé pour obtenir une température dudit premier courant de processus supérieure à une température requise pour obtenir des conditions supercritiques à l'eau à une extrémité aval de ladite première section de réaction.

5. Procédé selon l'une quelconque des revendications 1 à 4, dans lequel ledit second courant de processus a une température considérablement inférieure à la température supercritique de l'eau, et de préférence essentiellement semblable à une température d'un environnement ambiant, dans lequel ledit procédé est exécuté.

6. Procédé selon l'une quelconque des revendications 1 à 5, dans lequel ledit second courant de processus est ajouté audit premier courant de processus directement sans avoir à être chauffé.

7. Procédé selon l'une quelconque des revendications 1 à 6, dans lequel lesdits premier et second courants de processus ont des contenus semblables.

8. Procédé selon l'une quelconque des revendications 1 à 7, dans lequel lesdits premier et second courants de processus sont formés à partir d'une même source d'eau et de substance organique.

9. Procédé selon l'une quelconque des revendications 1 à 8, dans lequel ledit second courant de processus est hautement visqueux.

10. Procédé selon l'une quelconque des revendications 1 à 9, dans lequel ledit second courant de processus est composé de boues des eaux d'égouts, de boues de vieux papiers, ou de boues dérivées de la production d'eau potable.

11. Procédé selon l'une quelconque des revendications 1 à 8, dans lequel ledit premier courant de processus est difficile à concentrer relativement à son contenu organique.

12. Procédé selon l'une quelconque des revendications 1 à 8, dans lequel ledit premier courant de processus contient des composés organiques tant de grande taille que de petite taille, en particulier des composés organiques non volatils de grande taille et des composés organiques volatils de petite taille.

13. Procédé selon l'une quelconque des revendications 1 à 12, dans lequel ledit second courant de processus est ajouté audit premier courant de processus par une première entrée (18) ; et ledit second flux d'oxydant est ajouté audit premier courant de processus par une seconde entrée (19), ladite seconde entrée étant située en aval de ladite première entrée.

14. Procédé selon l'une quelconque des revendications 1 à 12, dans lequel ledit second flux d'oxydant et ledit second courant de processus sont ajoutés audit premier courant de processus par une entrée commune.

15. Procédé selon l'une quelconque des revendications 1 à 14, dans lequel ledit second flux d'oxydant est ajouté en excédent stocchiométrique au niveau de la section de réaction la plus aval de ladite chambre de réaction.
